# FASCICULE DE BREVET EUROPEEN

(11) **EP 3 145 810 B1**
(45) Date de publication et mention de la délivrance du brevet: **14.11.2018**
(21) Numéro de dépôt: 15725569.6
(22) Date de dépôt: 21.05.2015
(51) Int. Cl.: B64C 13/50, B64C 13/28, F16H 1/28, F16H 25/20

(54) **ACTIONNEUR DE COMMANDE D'UNE GOUVERNE DE VOL**
AKTUATOR ZUR STEUERUNG EINER FLUGSTEUERFLÄCHE
ACTUATOR FOR CONTROLLING A FLIGHT CONTROL SURFACE

(30) Priorité: 21.05.2014 FR 1454581
(43) Date de publication de la demande: 29.03.2017
(73) Titulaire: Safran Electronics & Defense, 92100 Boulogne-Billancourt (FR)
(72) Inventeur: CHAVIGNIER, Louis, F-92100 Boulogne-Billancourt (FR); LEBRUN, Marc, F-92100 Boulogne-Billancourt (FR); VIENNOT, Severin, F-92100 Boulogne-Billancourt (FR)
(74) Mandataire: Regimbeau
(86) Numéro de dépôt international: PCT/EP2015/061314
(87) Numéro de publication internationale: WO 2015/177301

(56) Documents cités:
- EP-A1- 1 731 421
- WO-A1-01/71217
- WO-A1-2008/023198
- DE-A1-102011 018 446
- DE-A1-102012 000 987

## Description

### DOMAINE DE L'INVENTION

L'invention concerne un actionneur de commande d'une gouverne de vol d'aéronef.

### ETAT DE LA TECHNIQUE

Dans les avions, les gouvernes (volets ou ailerons mobiles) permettent de modifier l'écoulement de l'air environnant sur la surface de l'avion, afin de piloter la position de l'avion dans l'espace.

Les gouvernes incluent par exemple les gouvernes de vol primaires qui sont actionnées en phase de vol, et les gouvernes de vol secondaires (becs de bord d'attaque, volets hypersustentateurs) qui ne sont actionnées que lors de certaines phases de vitesse réduite, notamment les phases de décollage et d'atterrissage.

Parmi les gouvernes de vol primaires, les ailerons situés aux extrémités des ailes de l'avion, permettent de contrôler le mouvement de roulis de l'avion.

Ces gouvernes sont montées pivotantes par rapport au fuselage de l'avion, et chaque gouverne est actionnée mécaniquement par un actionneur de commande logé dans l'aile de l'avion.

Il serait envisageable d'utiliser des actionneurs de commande électromécaniques pour actionner ces gouvernes.

Cependant, en cas de panne d'un tel actionneur, par exemple à cause d'une rupture d'une pièce de l'actionneur, il existe un risque que la gouverne se retrouve « flottante ». Ce type de panne entrainerait une perte de contrôle de l'avion et constituerait par conséquent un évènement catastrophique.

De plus, les constructeurs d'avions ont tendance à concevoir des avions ayant des ailes de plus en plus fines. Il est donc nécessaire de concevoir des actionneurs qui présentent un encombrement réduit, afin de pouvoir être logés dans une aile d'avion. Le document WO 2008/023 198 A divulgue un tel actionneur de commande de gouverne de vol comprenant les caractéristiques du préambule de la revendication 1.

### RESUME DE L'INVENTION

Un but de l'invention est de proposer un actionneur de commande d'une gouverne de vol d'aéronef qui présente un faible encombrement pour pouvoir être logé dans une aile, tout en présentant une bonne fiabilité.

Ce but est atteint dans le cadre de la présente invention grâce à un actionneur de commande d'une gouverne de vol d'aéronef, comprenant :
- une voie primaire comprenant un premier organe de génération d'un premier couple, et un premier arbre d'entrainement présentant une extrémité propre à être raccordée au premier organe et une extrémité propre à être raccordée à la gouverne,
- une voie secondaire comprenant un deuxième organe de génération d'un deuxième couple et un deuxième arbre d'entrainement présentant une extrémité propre à être raccordée au deuxième organe et une extrémité propre à être raccordée à la gouverne,
dans lequel le deuxième arbre d'entrainement est creux et s'étend autour du premier arbre d'entraînement, caractérisé par le fait que l'extrémité du premier arbre d'entraînement propre à être raccordée à la gouverne présente des premiers reliefs propres à coopérer avec des reliefs de la pour lier en rotation le premier arbre d'entraînement et la gouverne, et l'extrémité du deuxième arbre d'entraînement propre à être raccordée à la gouverne présente des deuxièmes reliefs propres à coopérer avec des reliefs de la gouverne pour lier en rotation le deuxième arbre d'entraînement et la gouverne.

La voie primaire et la voie secondaire permettent de piloter de manière indépendante la gouverne. Ainsi, en cas de panne de l'une des voies, l'autre voie permet de contrôler la position de la gouverne en évitant que celle-ci soit laissée flottante. Le comportement sécuritaire de l'actionneur est ainsi assuré par la maîtrise de la position de la gouverne.

De plus, comme le premier arbre d'entrainement est imbriqué dans le deuxième arbre d'entrainement, il est possible de concevoir un actionneur compact (présentant un diamètre faible), pouvant être logé dans une aile fine d'aéronef telles celles qui sont actuellement développées par les avionneurs.

L'actionneur peut en outre présenter les caractéristiques suivantes :
- l'actionneur comprend un carter, et le premier organe ou le deuxième organe est un moteur électrique propre à entrainer en rotation le premier arbre d'entrainement par rapport au carter pour déplacer la gouverne,
- l'actionneur comprend un carter, et le premier organe ou le deuxième organe est un frein propre à bloquer une rotation du premier arbre d'entrainement ou du deuxième arbre d'entrainement par rapport au carter pour empêcher un déplacement de la gouverne,
- le frein est propre à autoriser une rotation du premier arbre d'entrainement ou du deuxième arbre d'entrainement lorsque le frein est alimenté en énergie électrique et à bloquer la rotation du premier arbre d'entrainement ou du deuxième arbre d'entrainement lorsque le frein n'est pas alimenté en énergie électrique,
- le frein comprend un premier disque de frein solidaire en rotation du carter et un deuxième disque de frein solidaire en rotation du deuxième arbre d'entrainement, le premier disque de frein et le deuxième disque de frein étant propres à être déplacés l'un par rapport à l'autre entre une position de engagée dans laquelle les disques sont en contact l'un avec l'autre pour bloquer le deuxième arbre d'entrainement en rotation et une position désengagée dans laquelle les disques de frein sont espacés l'un de l'autre pour autoriser une rotation du deuxième arbre d'entrainement,
- le frein comprend en outre un organe élastique de rappel propre à solliciter les disques de frein vers la position engagée,
- le frein comprend en outre un électroaimant qui, lorsqu'il est activé, est propre à solliciter les disques de frein vers la position désengagée,
- le deuxième organe entoure le premier arbre d'entrainement,
- la voie primaire comprend un premier ensemble mécanique de réduction, et le premier organe est raccordé au premier arbre d'entrainement via le premier ensemble mécanique de réduction,
- la voie secondaire comprend un deuxième ensemble mécanique de réduction, et le deuxième organe est raccordé au deuxième arbre d'entrainement via le deuxième ensemble mécanique de réduction,
- le deuxième ensemble mécanique de réduction entoure le premier arbre d'entrainement,
- les deuxièmes reliefs s'étendent dans le prolongement des premiers reliefs, de sorte que les premiers reliefs et les deuxièmes reliefs coopèrent avec des mêmes reliefs de la gouverne,
- le premier arbre d'entrainement est mobile selon un premier axe de rotation et le deuxième arbre d'entrainement est mobile selon un deuxième axe de rotation, le deuxième axe de rotation étant confondu avec le premier axe de rotation,
- le premier organe comprend un stator et un rotor monté rotatif par rapport au stator, le rotor étant raccordé au premier arbre d'entrainement pour entrainer le premier arbre d'entrainement en rotation, et la voie primaire comprend un premier capteur de position propre à mesurer une position angulaire du rotor par rapport au stator,
- la voie secondaire comprend un deuxième capteur de position propre à mesurer une position angulaire du deuxième arbre d'entrainement.

### PRESENTATION DES DESSINS

D'autres caractéristiques et avantages ressortiront encore de la description qui suit, laquelle est purement illustrative et non limitative et doit être lue en regard des dessins annexés, parmi lesquelles :
- la figure 1 représente de manière schématique un aéronef,
- les figures 2 et 3 représentent de manière schématique en perspective un actionneur conforme à un mode de réalisation de l'invention,
- la figure 4 représente de manière schématique l'actionneur des figures 2 et 3, en coupe longitudinale,
- la figure 5 représente de manière schématique le frein de l'actionneur.

### DESCRIPTION DETAILLEE D'UN MODE DE REALISATION

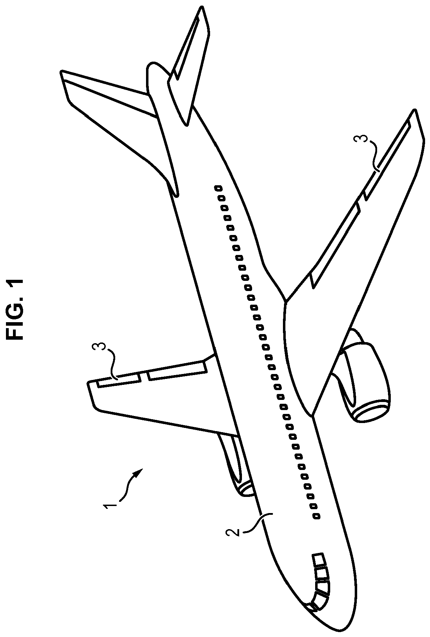

Sur la figure 1, l'aéronef 1 représenté est un avion comprenant un fuselage 2 et des gouvernes 3 montées mobiles par rapport au fuselage 2. Les gouvernes 3 sont des ailerons situés aux extrémités des ailes de l'avion. Ces ailerons 3 permettent de contrôler le mouvement de roulis de l'avion, c'est-à-dire le mouvement de rotation de l'avion autour de l'axe longitudinal de l'avion. Chaque aileron 3 est monté mobile en rotation par rapport au fuselage 2, autour d'un axe de rotation s'étendant sensiblement parallèlement à un bord de fuite de l'aile. L'ajustement de la position de chaque aileron 3 est assuré par un actionneur de commande associé à l'aileron 3.

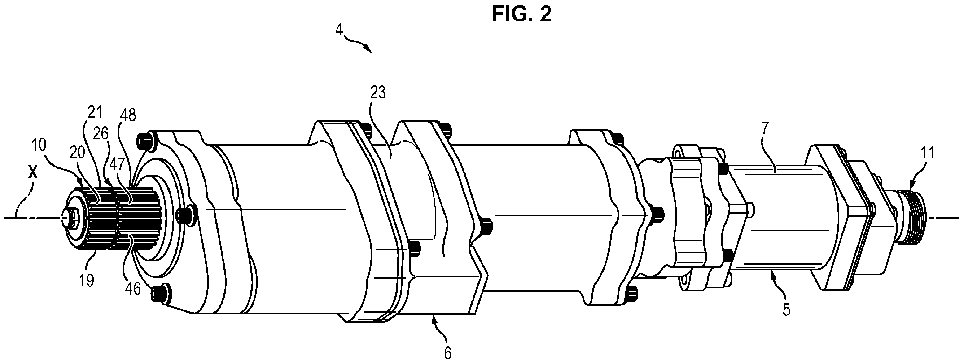

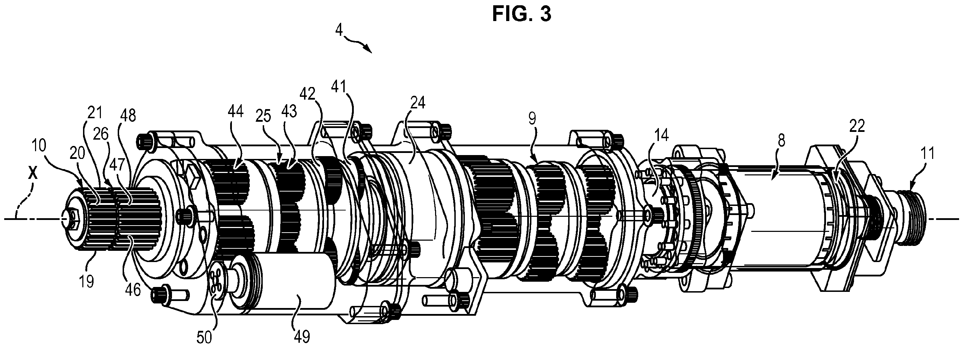

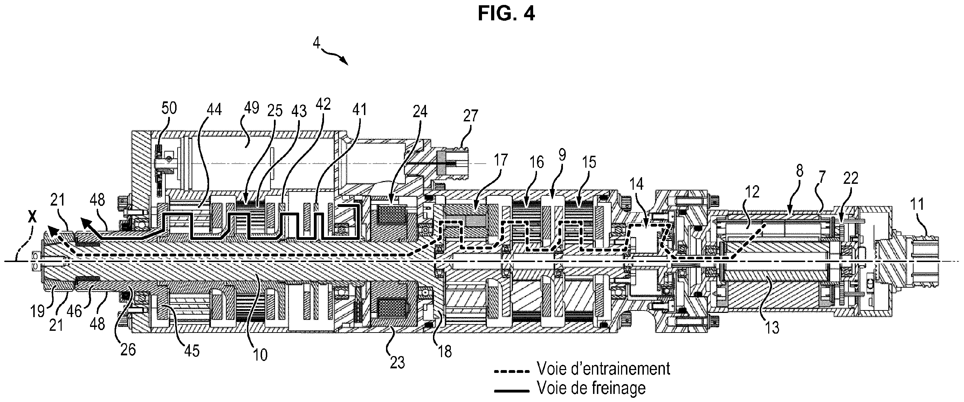

Sur les figures 2 à 4, l'actionneur de commande 4 représenté comprend une voie primaire 5 et une voie secondaire 6 indépendantes. Dans le mode de réalisation illustré sur ces figures, la voie primaire 5 est une voie d'entrainement, propre à générer un couple d'entrainement pour entrainer en rotation la gouverne de vol 3, et la voie secondaire 6 est une voie de freinage, propre à générer un couple de freinage qui s'oppose à une rotation de la gouverne de vol 3.

La voie primaire 5 comprend un premier carter 7, un moteur électrique 8, un premier ensemble mécanique de réduction 9 et un premier arbre d'entrainement 10.

Le premier carter 7 est fixé au fuselage 2 de l'avion.

La voie primaire 5 comprend également un premier connecteur 11 fixé au premier carter 7, le premier connecteur 11 permettant de raccorder la voie primaire 5 au calculateur de commande de vol pour commander la voie primaire.

Le moteur électrique 8 est un moteur synchrone à aimants permanents. Le moteur électrique 8 comprend un stator 12 monté fixe sur le premier carter 7 et un rotor 13 monté mobile en rotation par rapport au stator 12. Le rotor 13 est monté mobile en rotation par rapport au stator 12 autour d'un axe X de rotation, qui est également l'axe de rotation de la gouverne de vol 3. Par ailleurs, l'axe X est également l'axe longitudinal de l'actionneur 4.

Le premier ensemble mécanique de réduction 9 comprend plusieurs réducteurs montés en série. Autrement dit, la sortie d'un réducteur est raccordée à l'entrée du réducteur suivant.

Dans le mode de réalisation représenté sur les figures 2 à 4, le premier ensemble mécanique de réduction 9 comprend par exemple quatre réducteurs 14 à 17. Les quatre réducteurs incluent un réducteur à haut rapport de réduction 14 monté en sortie du moteur électrique 8 et trois trains épicycloïdaux 15 à 17.

Le réducteur à haut rapport de réduction 14 est par exemple un réducteur harmonique. De manière connue, le réducteur harmonique 14 comprend un moyeu elliptique monté solidaire en rotation du rotor du moteur électrique, un roulement à billes serti sur le moyeu elliptique, une coupelle à denture externe formée en un matériau flexible s'étendant autour du roulement à billes, et une bague rigide à denture interne montée rotative par rapport au carter. La coupelle en matériau flexible est déformée par le moyeu elliptique, ce qui provoque un engrènement partiel de la coupelle avec la bague rigide. La bague rigide comprend un nombre de dents supérieur au nombre de dents de la coupelle. En fonctionnement, une rotation du moyeu elliptique (qui constitue l'élément d'entrée du réducteur) entraine une propagation de la déformation de la coupelle autour de l'axe de rotation du moyeu, et par conséquent un déplacement de la zone d'engrènement entre la coupelle et la bague rigide. De cette manière, la bague rigide (qui constitue l'élément de sortie du réducteur) est entrainée en rotation à une vitesse de rotation inférieure à la vitesse de rotation du moyeu elliptique.

Le moyeu elliptique (qui constitue l'élément d'entrée du réducteur) du réducteur à haut rapport de réduction est monté solidaire en rotation du rotor 13 du moteur électrique 8.

De manière connue, chaque train épicycloïdal 15 à 17 comprend un planétaire intérieur (qui constitue l'élément d'entrée du train épicycloïdal), une couronne (fixée au premier carter 7), un porte-satellite (qui constitue l'élément de sortie du train épicycloïdal) et des satellites. Le planétaire intérieur, la couronne et le porte-satellite sont montés mobiles en rotation les uns par rapport aux autre autour d'un axe de rotation commun, qui est également l'axe X. Chaque satellite est monté rotatif sur le porte satellite et engrène avec le planétaire et la couronne, de sorte qu'une rotation du planétaire intérieur entraine une rotation du porte-satellite par l'intermédiaire des satellites, la vitesse de rotation du porte-satellite étant inférieure à la vitesse de rotation du planétaire intérieur.

Le planétaire intérieur du premier train épicycloïdal 15 est monté solidaire en rotation de l'élément de sortie du réducteur 14. Le planétaire intérieur du deuxième train épicycloïdal 16 est monté solidaire en rotation du porte-satellite du premier train épicycloïdal 15. De même, le planétaire intérieur du troisième train épicycloïdal 17 est monté solidaire en rotation du porte-satellite du deuxième train épicycloïdal 16. Enfin, le porte-satellite du troisième train épicycloïdal 17 est monté solidaire en rotation du premier arbre d'entrainement 10.

Le premier arbre d'entrainement 10 est monté mobile en rotation par rapport au premier carter 7 autour de l'axe X. Le premier arbre d'entrainement 10 comprend deux extrémités opposées: une première extrémité 18 reliée au porte-satellite du troisième train épicycloïdal 17 et une deuxième extrémité 19 propre à être reliée à la gouverne de vol 3.

A cet effet, la deuxième extrémité 19 présente une surface externe 20 présentant des premières cannelures 21. Les premières cannelures 21 s'étendent selon une direction longitudinale du premier arbre d'entrainement 10, parallèlement à l'axe X. Les premières cannelures 21 sont propres à coopérer avec des cannelures de la gouverne de vol 3, de sorte que la gouverne de vol 3 est solidaire en rotation du premier arbre d'entrainement 10.

Lorsque le moteur électrique 8 est alimenté en énergie électrique, le premier arbre d'entrainement 10 est entrainé en rotation par le moteur électrique 8 par l'intermédiaire du premier l'ensemble mécanique de réduction 9. Le premier arbre d'entrainement 10 est ainsi entrainé à une vitesse de rotation inférieure à la vitesse de rotation du rotor 13 du moteur électrique 8.

La voie primaire 5 comprend également un premier capteur de position 22 propre à mesurer une position angulaire du rotor 13 par rapport au stator 14.

Le premier capteur de position 22 est par exemple un codeur incrémental comprenant un disque rotatif monté solidaire en rotation du rotor 13 du moteur électrique 8. Le premier capteur de position 22 est propre à générer un premier signal de position représentatif de la position angulaire du rotor 13 par rapport au stator 12. Ce premier signal est transmis au calculateur de commande de vol (FCC) via le premier connecteur 11.

La voie secondaire 6 comprend un deuxième carter 23, un frein 24, un deuxième ensemble mécanique de réduction 25 et un deuxième arbre d'entrainement 26.

Le deuxième carter 23 est fixé au fuselage 2 de l'avion.

La voie secondaire 6 comprend également un deuxième connecteur 27 fixé au deuxième carter 23. Le deuxième connecteur 27 permet de raccorder la voie secondaire 6 au calculateur de commande de vol pour commander la voie secondaire.

Le frein 24 s'étend autour du premier arbre d'entrainement 10.

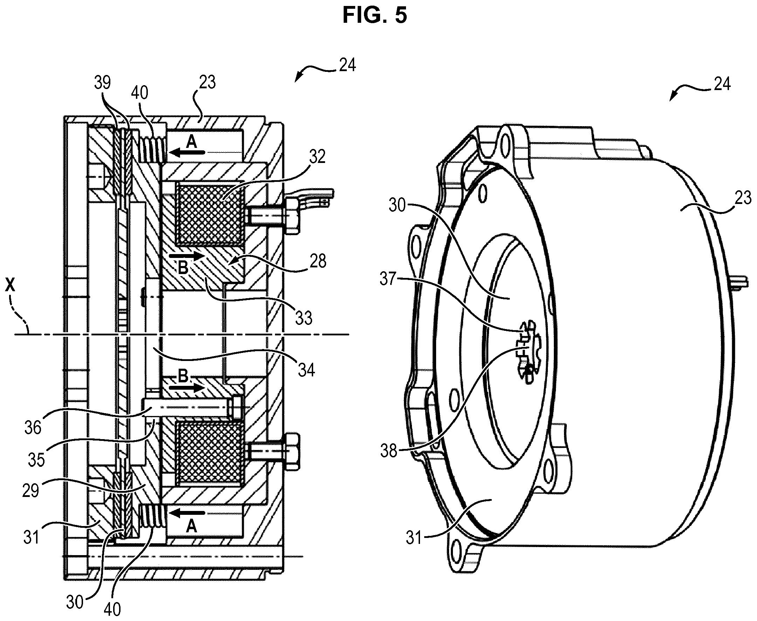

Comme illustré plus en détails sur la figure 5, le frein 24 comprend un électroaimant 28 et trois disques de frein. Les trois disques de frein incluent un premier disque de frein 29, un deuxième disque de frein 30 et un troisième disque de frein 31.

L'électroaimant 28 présente une forme générale annulaire et s'étend autour du premier arbre d'entrainement 10. L'électroaimant 28 comprend un bobinage annulaire 32 et un noyau plongeur 33 monté mobile en translation par rapport au bobinage, selon un axe de déplacement parallèle à l'axe X. Le bobinage 32 est monté fixe sur le deuxième carter 23. Lorsqu'il est alimenté en énergie électrique, le bobinage 32 génère un champ magnétique qui provoque un déplacement en translation du noyau plongeur 33 par rapport au bobinage 32.

Le premier disque de frein 29 présente également une forme générale annulaire. Le premier disque de frein 29 présente une ouverture centrale 34 à travers laquelle s'étend le premier arbre d'entrainement 10.

Le premier disque de frein 29 (ou plaque de freinage) est monté mobile en translation par rapport au deuxième carter 23 parallèlement à l'axe X, tout en étant solidaire en rotation du deuxième carter 23. A cet effet, le premier disque de frein 29 présente un orifice anti-rotation 35 et le frein 24 comprend un pion anti-rotation 36 fixé au deuxième carter 23. Le pion anti-rotation 36 s'étend à travers l'orifice anti-rotation 35 du premier disque de frein 29 de manière à empêcher une rotation de la premier disque de frein 29 par rapport au deuxième carter 23 autour de l'axe X. Le premier disque de frein 29 est fixé au noyau plongeur 33 de l'électroaimant 28, de sorte qu'un déplacement en translation du noyau plongeur 33 par rapport au bobinage 32 provoque concomitamment une translation identique du premier disque de frein 29 parallèlement à l'axe X.

Le deuxième disque de frein 30 (ou disque rotatif) est monté rotatif par rapport au deuxième carter 23 autour de l'axe X. De plus, le deuxième disque de frein 30 est monté solidaire en rotation du deuxième arbre d'entrainement 26, tout en étant mobile en translation par rapport au deuxième arbre d'entrainement 26 parallèlement à l'axe X.

A cet effet, le deuxième disque de frein 30 comprend des cannelures 37 propres à coopérer avec des cannelures complémentaires du deuxième arbre d'entrainement 26. Plus précisément, le deuxième disque de frein 30 comprend une ouverture centrale 38 à travers laquelle s'étend le deuxième arbre d'entrainement 26, l'ouverture centrale 38 présentant des cannelures propres à s'engager dans les cannelures complémentaires du deuxième arbre d'entrainement 26.

Le frein 24 comprend également une garniture de frein 39 fixée au deuxième disque de frein 30, en périphérie du deuxième disque de frein 30 et sur chaque face de ce dernier. La garniture de frein 39 est formée en un matériau de friction.

Le troisième disque de frein 31 (ou disque fixe) est monté fixe sur le deuxième carter 23.

Le premier disque de frein 29 et le troisième disque de frein 31 sont positionnés de part et d'autre du deuxième disque de frein 30.

Enfin, le frein 24 comprend un ou plusieurs organe(s) élastique(s) de rappel 40. Dans le mode de réalisation illustré sur la figure 5, les organes élastiques de rappel 40 sont des ressorts de compression interposés entre le premier disque de frein 29 et le deuxième carter 23.

Le premier disque de frein 29 est mobile en translation par rapport au deuxième carter 23 entre une position engagée dans laquelle le premier disque de frein 29 vient presser le deuxième disque de frein 30 entre le premier disque de frein 29 et le troisième disque de frein 31, et une position désengagée dans laquelle les disques de frein 29 à 31 sont libres les uns par rapport aux autres.

Les organes élastiques de rappel 40 sont agencés pour solliciter le premier disque de frein 29 vers la position engagée, dans un premier sens (flèche A).

L'électroaimant 28 est agencé de sorte que lorsqu'il est alimenté en énergie électrique, l'électroaimant 28 sollicite le premier disque de frein 29 vers la position désengagée, dans un deuxième sens (flèche B) opposé au premier sens, à l'encontre des organes élastiques de rappel 40.

Par ailleurs, comme illustré sur les figures 2 à 4, le deuxième ensemble mécanique de réduction 25 comprend plusieurs réducteurs montés en série. Autrement dit, la sortie d'un réducteur est raccordée à l'entrée du réducteur suivant.

Dans le mode de réalisation représenté sur les figures 2 à 4, le deuxième ensemble mécanique de réduction 25 comprend par exemple quatre réducteurs. Les quatre réducteurs incluent quatre trains épicycloïdaux 41 à 44.

De manière connue, chaque train épicycloïdal 41 à 44 comprend un planétaire intérieur (qui constitue l'élément d'entrée du train épicycloïdal), une couronne (fixée au deuxième carter 23), un porte-satellite (qui constitue l'élément de sortie du train épicycloïdal) et des satellites. Le planétaire intérieur, la couronne et le porte-satellite sont montés mobiles en rotation les uns par rapport aux autre autour d'un axe de rotation commun, qui est également l'axe X. Chaque satellite est monté rotatif sur le porte satellite et engrène avec le planétaire et la couronne, de sorte qu'une rotation du planétaire intérieur entraine une rotation du porte-satellite par l'intermédiaire des satellites, la vitesse de rotation du porte-satellite étant inférieure à la vitesse de rotation du planétaire intérieur.

Le planétaire intérieur du premier train épicycloïdal 41 est monté solidaire en rotation du deuxième disque de frein 30 (ou disque rotatif). Le planétaire intérieur du deuxième train épicycloïdal 42 est monté solidaire en rotation du porte-satellite du premier train épicycloïdal 41. De même, le planétaire intérieur du troisième train épicycloïdal 43 est monté solidaire en rotation du porte-satellite du deuxième train épicycloïdal 42. Le planétaire intérieur du quatrième train épicycloïdal 44 est monté solidaire en rotation du porte-satellite du troisième train épicycloïdal 43. Enfin, le porte-satellite du quatrième train épicycloïdal 44 est monté solidaire en rotation du deuxième arbre d'entrainement 26.

Le deuxième arbre d'entrainement 26 est monté mobile en rotation par rapport au deuxième carter 23 autour de l'axe X. Le deuxième arbre d'entrainement 26 est creux et entoure le premier arbre d'entrainement 10.

De plus, le deuxième arbre d'entrainement 26 comprend deux extrémités opposées : une première extrémité 45 reliée au porte-satellite du quatrième train épicycloïdal 44 et une deuxième extrémité 46 propre à être reliée à la gouverne de vol 3.

A cet effet, la deuxième extrémité 46 présente une surface externe 47 présentant des deuxièmes cannelures 48. Les deuxièmes cannelures 48 s'étendent selon une direction longitudinale du deuxième arbre d'entrainement 26, parallèlement à l'axe X. Les deuxièmes cannelures 48 sont propres à coopérer avec les cannelures de la gouverne de vol 3, de sorte que la gouverne de vol 3 est solidaire en rotation du deuxième arbre d'entrainement 26.

Les deuxièmes cannelures 48 s'étendent dans le prolongement des premières cannelures 21, de sorte que les premières cannelures 21 et les deuxièmes cannelures 48 coopèrent avec des mêmes cannelures de la gouverne 3.

Enfin, la voie secondaire 6 comprend un deuxième capteur de position 49 propre à mesurer une position angulaire du deuxième arbre d'entrainement 26. Le deuxième capteur 49 est monté sur le deuxième carter 23. Le deuxième capteur 49 est par exemple un codeur incrémental comprenant un disque rotatif. Le deuxième capteur 49 comprend également un pignon denté 50 monté solidaire en rotation du disque rotatif, le pignon denté 50 étant propre à engrener avec le deuxième arbre d'entrainement 26. De cette manière, une rotation du deuxième arbre d'entrainement 26 entraine une rotation proportionnelle du disque rotatif du codeur incrémental.

Le deuxième capteur de position 49 est propre à générer un deuxième signal de position représentatif de la position angulaire du deuxième arbre d'entrainement 26 par rapport au deuxième carter 23. Ce deuxième signal peut être transmis au calculateur de commande de vol (FCC) via le deuxième connecteur 27.

En fonctionnement normal, le frein 24 est initialement en position engagée. En effet, l'électroaimant 28 n'est pas alimenté en énergie électrique. Les organes de rappel élastiques 40 sollicitent les disques de frein 29 à 31 vers la position engagée (flèche A). De ce fait, la gouverne de vol 3 est bloquée dans une position fixe par rapport au fuselage 2 de l'avion, le frein 24 empêchant une rotation de la gouverne de vol 3.

De cette manière, la gouverne de vol 3 est maintenue en position fixe, sans qu'il soit nécessaire d'alimenter le frein 24 en énergie électrique. Cela permet de limiter la consommation d'énergie électrique de l'actionneur de commande 4. Cela permet également de maintenir la gouverne en position fixe en cas de panne de courant.

Pour modifier la position de la gouverne de vol 3, le calculateur de commande de vol commande simultanément l'alimentation en énergie électrique du moteur électrique 8 et du frein 24.

Le moteur électrique 8 étant alimenté en énergie électrique, le rotor 13 du moteur électrique 8 est entrainé en rotation par rapport au stator 12. De ce fait, le rotor 13 du moteur électrique entraine en rotation le premier arbre d'entrainement 10 par rapport au premier carter 7 par l'intermédiaire du premier ensemble mécanique de réduction 9.

De plus, le frein 24 étant également alimenté en énergie électrique, le noyau plongeur 33 de l'électroaimant 28 est entrainé en translation par rapport au bobinage 32, ce qui a pour effet de solliciter les disques de frein 29 à 31 vers la position désengagée (flèche B), à l'encontre des organes élastiques de rappel 40.

Sous l'effet de l'électroaimant 28, les disques de frein 29 à 31 se déplacent de la position engagée à la position désengagée.

Une fois les disques de frein 29 à 31 en position désengagée, le deuxième arbre d'entrainement 26 est libre de tourner par rapport au deuxième carter 23.

La gouverne de vol 3 est entrainée en rotation autour de l'axe X sous l'action du premier arbre d'entrainement 10.

Simultanément, le deuxième arbre d'entrainement 26 étant solidaire en rotation de la gouverne de vol 3, le deuxième arbre d'entrainement 26 est entrainé en rotation par rapport au deuxième carter 23, par la gouverne de vol 3.

Ainsi, le premier arbre d'entrainement 10 et le deuxième arbre d'entrainement 26 sont entrainés simultanément en rotation autour de l'axe X. De plus, les deux arbres d'entrainement 10 et 26 sont entrainés en rotation à la même vitesse.

Le calculateur de commande de vol reçoit le premier signal de mesure généré par le premier capteur de position 22 et le deuxième signal de mesure généré par le deuxième capteur de position 49. Le calculateur de commande de vol (FCC) compare le deuxième signal avec le premier signal et en détermine si l'actionneur fonctionne normalement. Tant que la différence entre les signaux est nulle, le calculateur en déduit que l'actionneur fonctionne normalement.

Lorsque la gouverne de vol a atteint la position de consigne, le calculateur de commande de vol commande l'arrêt de l'alimentation en énergie électrique du moteur électrique 8 et du frein 24. L'électroaimant 28 cesse alors de solliciter les disques de frein 29 à 31 vers la position désengagée. Les organes élastiques de rappel 40 sollicitent les disques de frein 29 à 31 vers la position engagée (flèche B).

Les disques de frein 29 à 31 sont déplacés de la position désengagée à la position engagée sous l'action des organes élastiques de rappel 40.

Une fois les disques de frein 29 à 31 en position engagée, le frein 24 empêche toute rotation du deuxième arbre d'entrainement 26, et la gouverne de vol 3 est à nouveau bloquée en position.

En cas d'endommagement de la voie primaire 5, dû par exemple à une rupture de l'une des pièces mécaniques de la voie primaire 5, le premier arbre d'entrainement 10 et le deuxième arbre d'entrainement 26 ne sont plus entrainés en rotation à la même vitesse. Le calculateur de commande de vol détecte une différence de vitesse en comparant le deuxième signal avec le premier signal.

Dans ce cas, le calculateur de commande de vol coupe l'alimentation en énergie électrique du moteur électrique 8 et du frein 24. Le frein 24 est ainsi maintenu en position engagée grâce aux organes élastiques de rappel 40. De cette manière, la gouverne de vol 3 est maintenue bloquée en position par rapport au fuselage de l'avion. Cela évite que la gouverne de vol 3 soit flottante.

En cas d'endommagement de la voie secondaire 6, dû par exemple à une rupture de l'une des pièces mécaniques de la voie secondaire 6, le calculateur de commande de vol détecte une différence de vitesse en comparant le deuxième signal avec le premier signal.

Dans ce cas, le calculateur de commande de vol peut piloter le moteur électrique 8 pour que le moteur électrique 8 agisse comme un frein sur la gouverne de vol 3. De cette manière, la gouverne de vol 3 est maintenue en position par rapport au fuselage 2 de l'avion sous l'action du moteur électrique 8. Cela évite également que la gouverne de vol 3 soit flottante.

De manière générale, en cas de panne de l'une des voies, l'autre voie permet de contrôler la position de la gouverne de vol 3 en évitant que celle-ci soit laissée flottante.

L'actionneur 4 proposé évite ainsi une perte de contrôle de l'avion qui constituerait un évènement catastrophique.

Par ailleurs, comme les deux voies 5 et 6 sont indépendantes, le calculateur de commande de vol peut détecter une panne en comparant les signaux de position issus des deux voies. Une fois la panne détectée, le calculateur peut signaler la panne au pilote. L'actionneur 4 peut alors être envoyé en maintenance pour réparation.

## Revendications

1. Actionneur (4) de commande d'une gouverne de vol (3) d'aéronef, comprenant :
- une voie primaire (5) comprenant un premier organe (8) de génération d'un premier couple, et un premier arbre d'entrainement (10) présentant une extrémité (18) propre à être raccordée au premier organe (8) et une extrémité (19) propre à être raccordée à la gouverne (3),
- une voie secondaire (6) comprenant un deuxième organe (24) de génération d'un deuxième couple et un deuxième arbre d'entrainement (26) présentant une extrémité (45) propre à être raccordée au deuxième organe (24) et une extrémité (46) propre à être raccordée à la gouverne (3),
dans lequel le deuxième arbre d'entrainement (26) est creux et s'étend autour du premier arbre d'entrainement (10),
**caractérisé par le fait que** l'extrémité (19) du premier arbre d'entrainement (26) propre à être raccordée à la gouverne (3) présente des premiers reliefs (21) propres à coopérer avec des reliefs de la gouverne (3) pour lier en rotation le premier arbre d'entrainement (10) et la gouverne (3), et que l'extrémité (46) du deuxième arbre d'entrainement (26) propre à être raccordée à la gouverne (3) présente des deuxièmes reliefs (48) propres à coopérer avec des reliefs de la gouverne pour lier en rotation le deuxième arbre d'entrainement (26) et la gouverne (3).

2. Actionneur selon la revendication 1, comprenant un carter (7) et dans lequel le premier organe (8) ou le deuxième organe (24) est un moteur électrique propre à entrainer en rotation le premier arbre d'entrainement (10) ou le deuxième arbre d'entrainement (26) par rapport au carter (7) pour déplacer la gouverne (3).

3. Actionneur selon l'une des revendications 1 et 2, comprenant un carter (23) et dans lequel le premier organe (8) ou le deuxième organe (24) est un frein propre à bloquer une rotation du premier arbre d'entrainement (10) ou du deuxième arbre d'entrainement (26) par rapport au carter (23) pour empêcher un déplacement de la gouverne (3).

4. Actionneur selon la revendication 3, dans lequel le frein (24) est propre à autoriser une rotation du premier arbre d'entrainement (10) ou du deuxième arbre d'entrainement (26) lorsque le frein (24) est alimenté en énergie électrique et à bloquer la rotation du premier arbre d'entrainement (10) ou du deuxième arbre d'entrainement (26) lorsque le frein (24) n'est pas alimenté en énergie électrique.

5. Actionneur selon l'une des revendications 3 ou 4, dans lequel le frein (24) comprend un premier disque de frein (29) solidaire en rotation du carter (23) et un deuxième disque de frein (30) solidaire en rotation du deuxième arbre d'entrainement (26), le premier disque de frein (29) et le deuxième disque de frein (30) étant propres à être déplacés l'un par rapport à l'autre entre une position engagée dans laquelle les disques (29, 30) sont en contact l'un avec l'autre pour bloquer le deuxième arbre d'entrainement (26) en rotation et une position désengagée dans laquelle les disques de frein (29, 30) sont espacés l'un de l'autre pour autoriser une rotation du deuxième arbre d'entrainement (26).

6. Actionneur selon la revendication 5, dans lequel le frein (24) comprend en outre un organe élastique de rappel (40) propre à solliciter les disques de frein (29, 30) vers la position engagée.

7. Actionneur selon l'une des revendications 3 ou 4, dans lequel le frein (24) comprend en outre un électroaimant (28) qui, lorsqu'il est activé, est propre à solliciter les disques de frein (29, 30) vers la position désengagée.

8. Actionneur selon l'une des revendications 1 à 7, dans lequel le deuxième organe (24) entoure le premier arbre d'entrainement (10).

9. Actionneur selon l'une des revendications 1 à 8, dans lequel la voie primaire (5) comprend un premier ensemble mécanique de réduction (9), et dans lequel le premier organe (8) est raccordé au premier arbre d'entrainement (10) via le premier ensemble mécanique de réduction (9).

10. Actionneur selon l'une des revendications 1 à 9, dans lequel la voie secondaire (6) comprend un deuxième ensemble mécanique de réduction (25), et dans lequel le deuxième organe (24) est raccordé au deuxième arbre d'entrainement (26) via le deuxième ensemble mécanique de réduction (25).

11. Actionneur selon la revendication 10, dans lequel le deuxième ensemble mécanique de réduction (25) entoure le premier arbre d'entrainement (10).

12. Actionneur selon l'une des revendications 1 à 11, dans lequel les deuxièmes reliefs (48) s'étendent dans le prolongement des premiers reliefs (21), de sorte que les premiers reliefs (21) et les deuxièmes reliefs (48) coopèrent avec des mêmes reliefs de la gouverne.

13. Actionneur selon l'une des revendications 1 à 12, dans lequel le premier arbre d'entrainement (10) est mobile selon un premier axe de rotation et le deuxième arbre d'entrainement (26) est mobile selon un deuxième axe de rotation, le deuxième axe de rotation étant confondu avec le premier axe de rotation.

14. Actionneur selon l'une des revendications 1 à 13, dans lequel le premier organe (8) comprend un stator (12) et un rotor (13) monté rotatif par rapport au stator (12), le rotor (13) étant raccordé au premier arbre d'entrainement (10) pour entrainer le premier arbre d'entrainement (10) en rotation, et la voie primaire (5) comprend un premier capteur de position (22) propre à mesurer une position angulaire du rotor (13) par rapport au stator (12).

15. Actionneur selon l'une des revendications 1 à 14, dans lequel la voie secondaire (6) comprend un deuxième capteur de position (49) propre à mesurer une position angulaire du deuxième arbre d'entrainement (26).

## Patentansprüche

1. Aktuator (4) zur Steuerung einer Flugsteuerfläche (3) eines Luftfahrzeugs, der Folgendes umfasst:
- einen Primärweg (5), der ein erstes Organ (8) zur Erzeugung eines ersten Drehmoments und eine erste Antriebswelle (10) umfasst, die ein Ende (18), das geeignet ist, an das erste Organ (8) angeschlossen zu werden, und ein Ende (19) aufweist, das geeignet ist, an die Steuerfläche (3) angeschlossen zu werden,
- einen Sekundärweg (6), der ein zweites Organ (24) zur Erzeugung eines zweiten Drehmoments und eine zweite Antriebswelle (26) umfasst, die ein Ende (45), das geeignet ist, an das zweite Organ (24) angeschlossen zu werden, und ein Ende (46) aufweist, das geeignet ist, an die Steuerfläche (3) angeschlossen zu werden,
wobei die zweite Antriebswelle (26) hohl ist und sich um die erste Antriebswelle (10) herum erstreckt,
**dadurch gekennzeichnet, dass** das Ende (19) der ersten Antriebswelle (10), das geeignet ist, an die Steuerfläche (3) angeschlossen zu werden, erste Reliefs (21) aufweist, die geeignet sind, mit Reliefs der Steuerfläche (3) zusammenzuwirken, um die erste Antriebswelle (10) und die Steuerfläche (3) drehbar zu verbinden, und dass das Ende (46) der zweiten Antriebswelle (26), das geeignet ist, an die Steuerfläche (3) angeschlossen zu werden, zweite Reliefs (48) aufweist, die geeignet sind, mit den Reliefs der Steuerfläche zusammenzuwirken, um die zweite Antriebswelle (26) und die Steuerfläche (3) drehbar zu verbinden.

2. Aktuator nach Anspruch 1, der ein Gehäuse (7) umfasst und in dem das erste Organ (8) oder das zweite Organ (24) ein Elektromotor ist, der geeignet ist, die erste Antriebswelle (10) oder die zweite Antriebswelle (26) in Bezug zu dem Gehäuse (7) anzutreiben, um die Steuerfläche (3) zu verlagern.

3. Aktuator nach einem der Ansprüche 1 und 2, der ein Gehäuse (23) umfasst und in dem das erste Organ (8) oder das zweite Organ (24) eine Bremse ist, die geeignet ist, eine Drehung der ersten Antriebswelle (10) oder der zweiten Antriebswelle (26) in Bezug zu dem Gehäuse (23) zu sperren, um eine Verlagerung der Steuerfläche (3) zu verhindern.

4. Aktuator nach Anspruch 3, wobei die Bremse (24) geeignet ist, eine Drehung der ersten Antriebswelle (10) oder der zweiten Antriebswelle (26) zuzulassen, wenn die Bremse (24) mit elektrischer Energie versorgt wird, und die Drehung der ersten Antriebswelle (10) oder der zweiten Antriebswelle (26) zu sperren, wenn die Bremse (24) nicht mit elektrischer Energie versorgt wird.

5. Aktor nach einem der Ansprüche 3 oder 4, wobei die Bremse (24) eine erste Bremsscheibe (29), die drehfest mit dem Gehäuse (23) verbunden ist, und eine zweite Bremsscheibe (30) umfasst, die drehfest mit der zweiten Antriebswelle (26) verbunden ist, wobei die erste Bremsscheibe (29) und die zweite Bremsscheibe (30) geeignet sind, in Bezug zueinander zwischen einer Eingriffsstellung, in der die Scheiben (29, 30) miteinander in Kontakt sind, um die Drehung der zweiten Antriebswelle (26) zu sperren, und einer Außereingriffsstellung verlagert zu werden, in der die Bremsscheiben (29, 30) voneinander beabstandet sind, um eine Drehung der zweiten Antriebswelle (26) zuzulassen.

6. Aktuator nach Anspruch 5, wobei die Bremse (24) ferner ein elastisches Rückstellorgan (40) umfasst, das geeignet ist, die Bremsscheiben (29, 30) in Richtung der Eingriffsstellung zu ziehen.

7. Aktuator nach einem der Ansprüche 3 oder 4, wobei die Bremse (24) ferner einen Elektromagneten (28) umfasst, der, wenn er aktiviert wird, geeignet ist, die Bremsscheiben (29, 30) in die Außereingriffsstellung zu ziehen.

8. Aktuator nach einem der Ansprüche 1 bis 7, wobei das zweite Organ (24) die erste Antriebswelle (10) umgibt.

9. Aktuator nach einem der Ansprüche 1 bis 8, wobei der Primärweg (5) eine erste mechanische Reduktionsbaugruppe (9) umfasst und wobei das erste Organ (8) über die erste mechanische Reduktionsbaugruppe (9) an die erste Antriebswelle (10) angeschlossen ist.

10. Aktuator nach einem der Ansprüche 1 bis 9, wobei der Sekundärweg (6) eine zweite mechanische Reduktionsbaugruppe (25) umfasst und wobei das zweite Organ (24) über die zweite mechanische Reduktionsbaugruppe (25) an die zweite Antriebswelle (26) angeschlossen ist.

11. Aktuator nach Anspruch 10, wobei die zweite mechanische Reduktionsbaugruppe (25) die erste Antriebswelle (10) umgibt.

12. Aktuator nach einem der Ansprüche 1 bis 11, wobei die zweiten Reliefs (48) sich in der Verlängerung der ersten Reliefs (21) erstrecken, derart, dass die ersten Reliefs (21) und die zweiten Reliefs (48) mit den gleichen Reliefs der Steuerfläche zusammenwirken.

13. Aktuator nach einem der Ansprüche 1 bis 12, wobei die erste Antriebswelle (10) gemäß einer ersten Drehachse beweglich ist und die zweite Antriebswelle (26) gemäß einer zweiten Drehachse beweglich ist, wobei die zweite Drehachse mit der ersten Drehachse zusammenfällt.

14. Aktuator nach einem der Ansprüche 1 bis 13, wobei das erste Organ (8) einen Stator (12) und einen Rotor (13) umfasst, der in Bezug auf den Stator (12) drehbar gelagert ist, wobei der Rotor (13) an die erste Antriebswelle (10) angeschlossen ist, um die erste Antriebswelle (10) drehbar anzutreiben, und der Primärweg (5) einen ersten Lagesensor (22) umfasst, der geeignet ist, eine Winkelstellung des Rotors (13) in Bezug zu dem Stator (12) zu messen.

15. Aktuator nach einem der Ansprüche 1 bis 14, wobei der Sekundärweg (6) einen zweiten Lagesensor (49) umfasst, der geeignet ist, eine Winkelstellung der zweiten Antriebswelle (26) zu messen.

## Claims

1. An actuator (4) for controlling a flight control surface (3) of an aircraft, comprising:
- a primary path (5) comprising a first member (8) for generating a first torque, and a first drive shaft (10) having one end (18) capable of being connected to the first member (8) and one end (19) capable of being connected to the control surface (3),
- a secondary path (6) comprising a second member (24) for generating a second torque and a second drive shaft (26) having one end (45) capable of being connected to the second member (24) and one end (46) capable of being connected to the control surface (3),
wherein the second drive shaft (26) is hollow and extends around the first drive shaft (10),
**characterized by** the fact that the end (19) of the first drive shaft (10) capable of being connected to the control surface (3) has first reliefs (21) capable of cooperating with reliefs of the control surface (3) to connect in rotation the first drive shaft (10) and the control surface (3), and that the end (46) of the second drive shaft (26) capable of being connected to the control surface (3) has second reliefs (48) capable of cooperating with reliefs of the control surface to connect in rotation the second drive shaft (26) and the control surface (3).

2. The actuator according to claim 1, comprising a casing (7) and wherein the first member (8) or the second member (24) is an electric motor capable of driving in rotation the first drive shaft (10) or the second drive shaft (26) with respect to the casing (7) to move the control surface (3).

3. The actuator according to one of claims 1 and 2, comprising a casing (23) and wherein the first member (8) or the second member (24) is a brake capable of blocking rotation of the first drive shaft (10) or the second drive shaft (26) with respect to the casing (23) to prevent displacement of the control surface (3).

4. The actuator according to claim 3, wherein the brake (24) is capable of allowing rotation of the first drive shaft (10) or of the second drive shaft (26) when the brake (24) is supplied with electrical power and of blocking the rotation of the first drive shaft (10) or of the second drive shaft (26) when the brake (24) is not supplied with electrical power.

5. The actuator according to one of claims 3 or 4, wherein the brake (24) comprises a first brake disk (29) fixedly mounted in rotation with the casing (23) and a second brake disk (30) fixedly mounted in rotation with the second drive shaft (26), the first brake disk (29) and the second brake disk (30) being capable of being displaced with respect to one another between an engaged position in which the disks (29, 30) are in contact with one another for blocking the second drive shaft (26) in rotation and a disengaged position in which the brake disks (29, 30) are spaced from one another to allow rotation of the second drive shaft (26).

6. The actuator according to claim 5, wherein the brake (24) further comprises an elastic return member (40) capable of biasing the brake disks (29, 30) toward the engaged position.

7. The actuator according to one of claims 3 or 4, wherein the brake (24) further comprises an electromagnet (28) which, when it is activated, is capable of biasing the brake disks (29, 30) toward the disengaged position.

8. The actuator according to one of claims 1 to 7, wherein the second member (24) surrounds the first drive shaft (10).

9. The actuator according to one of claims 1 to 8, wherein the primary path (5) comprises a first mechanical reduction assembly (9), and wherein the first member (8) is connected to the first drive shaft (10) through the first mechanical reduction assembly (9).

10. The actuator according to one of claims 1 to 9, wherein the secondary path (6) comprises a second mechanical reduction assembly (25) and wherein the second member (24) is connected to the second drive shaft (26) through the second mechanical reduction assembly (25) .

11. The actuator according to claim 10, wherein the second mechanical reduction assembly (25) surrounds the first drive shaft (10).

12. The actuator according to one of claims 1 to 11, wherein the second reliefs (48) extend in the continuation of the first reliefs (21) so that the first reliefs (21) and the second reliefs (48) cooperate with the same reliefs of the control surface.

13. The actuator according to one of claims 1 to 12, wherein the first drive shaft (10) is movable along a first axis of rotation and the second drive shaft (26) is movable along a second axis of rotation, the second axis of rotation being coincident with the first axis of rotation.

14. The actuator according to one of claims 1 to 13, wherein the first member (8) comprises a stator (12) and a rotor (13) rotatably mounted with respect to the stator (12), the rotor (13) being connected to the first drive shaft (10) to drive the first drive shaft (10) in rotation, and the primary path (5) comprises a first position sensor (22) capable of measuring an angular position of the rotor (13) with respect to the stator (12) .

15. The actuator according to one of claims 1 to 14, wherein he secondary path (6) comprises a second position sensor (49) capable of measuring an angular position of the second drive shaft (26).
